# FASCICULE DE BREVET EUROPEEN

(11) **EP 1 642 643 B1**
(45) Date de publication et mention de la délivrance du brevet: **24.11.2010**
(21) Numéro de dépôt: 04292321.9
(22) Date de dépôt: 29.09.2004
(51) Int. Cl.: B01J 35/00, E01F 8/00, C04B 14/46, C04B 14/10, C04B 14/14, C04B 18/26

(54) **Compositions de revêtement pour parements anti-bruits dépolluants**
Beschichtungszusammensetzung für schallabsorbierende und verschmutzungbeseitigende Verkleidungen
Coating composition for sound-absorbing and pollution-abating facings

(43) Date de publication de la demande: 05.04.2006
(73) Titulaire: Eurovia, 92500 Rueil-Malmaison (FR)
(72) Inventeur: Toulan, Emmanuel, 75014 Paris (FR); Maze, Michel, 33000 Bordeaux (FR); Raffegeau, Hervé, 33200 Bordeaux (FR)
(74) Mandataire: Ahner, Francis

(56) Documents cités:
- EP-A- 0 786 283
- EP-A- 1 163 193
- EP-A- 1 306 828
- EP-A- 1 369 532
- FR-A- 2 754 288
- DATABASE WPI Section Ch, Week 200060 Derwent Publications Ltd., London, GB; Class E36, AN 2000-621505 XP002319230 & JP 2000 220117 A (SEKISUI JUSHI KK) 8 août 2000 (2000-08-08)
- DATABASE WPI Section Ch, Week 200331 Derwent Publications Ltd., London, GB; Class L02, AN 2003-319704 XP002319231 & JP 2003 026485 A (NIKKA BOARD KK) 29 janvier 2003 (2003-01-29)

## Description

La présente invention concerne des compositions de revêtement pour parements anti-bruits absorbant acoustique et dépolluants, les parements contenant ces compositions, et leur procédé de fabrication.

Les émissions d'oxydes d'azote apparaissent lors des combustions à hautes températures de combustibles fossiles tels que les charbons, le fuel, le pétrole, les essences, ... Le secteur des transports est responsable de près de 60 % des émissions d'oxydes d'azote. En effet le monoxyde d'azote rejeté par les pots d'échappements des véhicules est oxydé par l'ozone en dioxyde d'azote. La pollution de l'air ainsi engendrée est devenue ces dernières années un problème majeur, notamment avec l'augmentation considérable du nombre de véhicules circulant, en particulier dans les grandes agglomérations.

Les conséquences des rejets des oxydes d'azote se font sentir sur l'environnement. Ces oxydes participent aux pluies acides, à la formation de l'ozone troposphérique, à l'atteinte de la couche d'ozone, et à l'effet de serre.

Des effets sur la santé humaine ont également été mis en évidence. Les populations à risque sont les enfants, les personnes âgées, les asthmatiques, et les insuffisants respiratoires, qui sont particulièrement sensibles à cette pollution. Elle peut entraîner une altération des fonctions respiratoires, une hyperréactivité bronchique, et un accroissement de la sensibilité des bronches aux infections.

Une autre conséquence de la pollution par les oxydes d'azote en milieu urbain, est la dégradation des édifices de construction. Il est ainsi devenu très difficile voire impossible de conserver aux revêtements muraux extérieurs leur aspect d'origine. Des particules se déposent sur la surface des murs engendrant une couleur foncée presque noire, et les pluies acides exercent un effet délétère sur la pierre. L'entretien et la maintenance des édifices représentent donc un coût économique de plus en plus lourd à supporter pour les propriétaires et/ou pour les collectivités locales.

Face à tous ces problèmes, une surveillance accrue sur des quantités d'oxydes d'azote ainsi que des seuils d'alerte ont été mis en place.

Diverses solutions ont été proposées, notamment dans le but de protéger les surfaces murales. La plus répandue consiste à appliquer un produit hydrophobe à base de silicone permettant d'éviter aux eaux de pluies d'adhérer et de pénétrer dans les revêtements. Ce type de produit est en outre stable en milieu alcalin, et à la lumière.
Dans le but de protéger les revêtements contre les effets des polluants de type oxydes d'azote, mais aussi dans le but d'en diminuer la quantité, les brevets EP-0 633 064 et EP-0 786 283 proposent l'incorporation dans les compositions de ciment, d'un photocatalyseur de type dioxyde de titane (Ti02). Ce catalyseur permet d'oxyder, et donc de neutraliser les substances polluantes contenues dans l'air. Cette technologie a été mise en oeuvre pour réaliser des pavés « auto nettoyants » pouvant être appliqués aussi bien sur les routes que sur des trottoirs, mais également adaptable à une application sur des murs.

EP-1 369 532 et FR-2 754 288 divulguent des parements anti-bruits.

Le plus souvent, la pollution par les oxydes d'azote, lorsqu'elle est due à une concentration importante de véhicules en une zone donnée, s'accompagne de nuisances sonores non négligeables, en particulier en milieu urbain et suburbain. Dans ce domaine, les solutions les plus couramment utilisées consistent à édifier des murs susceptibles d'absorber ou de réfléchir les différents bruits, et donc de former un écran. L'accumulation des polluants de type oxydes d'azote se trouve alors augmentée dans ces zones.

Il est donc d'un grand intérêt de pouvoir mettre au point des parements susceptibles de minimiser les nuisances sonores tout en luttant contre l'accumulation de substances polluantes telles que les oxydes d'azote.

La Demanderesse a trouvé de façon surprenante que cet objectif pouvait être atteint en utilisant certains matériaux absorbant les bruits dans des revêtements contenant des photocatalyseurs capables d'oxyder les substances polluantes, sans perte d'efficacité du photocatalyseur due aux interactions avec lesdits matériaux.

La présente invention a donc pour objet une composition de revêtement pour parements anti-bruits absorbants acoustiques et dépolluants comprenant un photocatalyseur comprenant des particules de Ti02, au moins un liant hydraulique choisi parmi les ciments ou les composés siliconés, au moins un matériau absorbant acoustique et de l'eau, selon la revendication 1.

La composition selon l'invention contient généralement entre 0,5 % et 20 % de particules de TiO2, en poids par rapport au poids total de la composition. Préférentiellement cette quantité de TiO2 est comprise entre 5 % et 15 % en poids par rapport au poids total de la composition.

Les particules de Ti02 peuvent exister sous plusieurs formes cristallines. Les deux formes principales sont la forme rutile, et la forme anatase. La forme rutile est la plus stable, et la forme anatase est convertie en rutile à température ambiante avec une vitesse extrêmement lente. Cette vitesse de conversion augmente avec la température. Par contre la forme rutile ne peut se convertir en anatase. Les particules de Ti02 utilisées dans les compositions selon l'invention seront préférentiellement sous forme anatase. La proportion de Ti02 sous forme anatase sera ainsi généralement d'au moins 5 % en poids, préférentiellement d'au moins 25 % en poids, plus particulièrement d'au moins 50 % en poids et de façon tout à fait particulière d'au moins 70 % en poids par rapport au poids total de Ti02 présent dans les compositions.

Dans un aspect de l'invention, le liant hydraulique présent dans les compositions est un ciment. Les ciments convenant à la mise en oeuvre de l'invention sont en particulier choisis parmi les ciments Portland, les ciments Portland composés contenant notamment des laitiers, des cendres volantes ou des fumées de silice, les ciments au laitier, les ciments à maçonner, les ciments prompt naturels, les ciments alumineux fondus et les ciments blancs.

Dans un aspect avantageux de l'invention, on utilise des ciments Portland à haute teneur en alumine, tels que les ciments alumineux fondus.

Dans un aspect préféré de l'invention, lorsque le liant hydraulique est choisi parmi les ciments, une partie du ciment est remplacée par du pouzzolane. Par exemple la quantité de pouzzolane comprise dans la composition selon l'invention peut aller jusqu'à 40 % en poids par rapport au poids total de la composition. De manière préférentielle, la quantité de pouzzolane peut aller jusqu'à 25 %, et plus particulièrement jusqu'à 10% en poids par rapport au poids total de la composition.

Un autre aspect de l'invention concerne les compositions telles que définies ci-dessus pour lesquelles le liant hydraulique est un composé siliconé notamment choisi parmi les silices colloïdales et les polyorganosiloxanes.

La quantité totale de liant hydraulique présent dans les compositions de l'invention est comprise entre 10 % et 50 % en poids par rapport au poids total de la composition, et préférentiellement entre 13 % et 30 % en poids par rapport au poids total de la composition.

Au sens de la présente invention, le matériau acoustique est choisi parmi les copeaux de bois, les billes d'argile, et les billes de caoutchouc.

Les copeaux de bois proviennent avantageusement d'épicéa, de pins sylvestres, et de pins douglas. Le pourcentage d'écorce contenu dans les copeaux de bois n'excédera pas 3 %. La granulométrie moyenne sera préférentiellement comprise entre 3 mm et 6 mm.

Les billes d'argile seront par exemple des billes d'argile expansé dont le diamètre moyen sera de préférence compris entre 2 mm et 6 mm.

La quantité de matériau acoustique présent dans la composition de l'invention sera en général comprise entre 20 % et 60 %, et de préférence entre 25 % et 50 % en poids par rapport au poids total de la composition.

Dans un autre aspect de l'invention, la composition de revêtement comprend en outre du sable, en quantité allant jusqu'à 70 % en poids par rapport au poids total de la composition. De façon particulière, la quantité de sable ne dépassera pas 50 % en poids, et préférentiellement ne dépassera pas 30 % en poids par rapport au poids total de la composition.

De façon classique, les compositions de la présente invention pourront contenir un ou plusieurs oxydes métalliques de coloration. On peut citer à titre d'exemple les oxydes de fer, de chrome, de cobalt, d'aluminium, ou les oxydes mixtes de ces métaux. Les couleurs susceptible d'être obtenues peuvent être choisies parmi les jaunes, les verts, les bleus, les bruns, les rouges. La composition sera en outre exempte de tout colorant organique.

Dans le but d'améliorer les propriétés de tenue des compositions de la présente invention, on pourra ajouter auxdites compositions des additifs organiques, pour autant qu'ils n'engendrent pas d'interactions avec les particules de Ti02 constituant le photocatalyseur. A titre d'exemple, et de façon non limitative, on peut citer les fluidifiants tels que les résines mélamine, les hydrofuges, les agents régulateurs de la viscosité tels que les éthers de cellulose, les plastifiants tels que les poudres polymériques et les polymères acryliques, les agents épaississants tels que l'amidon modifié, les tensioactifs anioniques tels que les esters sulfuriques à longue chaîne, les agents empêchant la formation de bulles d'air, les fibres organiques et inorganiques.

De manière à faciliter l'entretien et le nettoyage des parements obtenus à l'aide des compositions selon l'invention, ces dernières peuvent être recouvertes d'un revêtement « anti-graffiti » qui permettra d'enlever facilement les traces de peinture indésirables. On peut citer en particulier les revêtements micro-poreux à base de résines polyesters hydroxylées tels que le produit ULTIMA AG® commercialisé par la société STOP-GRAFF ou à base de polysaccharides végétaux tels que le PSS 20® commercialisé par la société PSS Interservice, et les émulsions aqueuses à base de cires végétales renforcées telles que le produit STG 3502® commercialisé par la société STOP-GRAFF.

Les compositions de la présente invention sont destinées à être utilisées pour la fabrication de parements anti-bruits absorbants acoustiques et dépolluants. A ce titre elles sont destinées à être appliquées sur tout type de support rigide classiquement employé par l'homme du métier. Dans un aspect préféré de l'invention le support est constitué par un béton.

La présente invention concerne donc également un parement anti-bruits absorbant acoustique et dépolluant caractérisé en ce qu'il est obtenu à partir d'une composition selon l'invention, telle que définie précédemment, appliquée sur un support rigide, et plus particulièrement sur un béton.

Par béton au sens de l'invention, on entend tout type de béton couramment utilisé par l'homme du métier. Il peut être en particulier constitué d'un ciment mélangé avec un agrégat inerte par exemple choisi parmi le sable, les pierres naturelles, les gravats, les pierres écrasées.

Les parements de l'invention peuvent notamment s'appliquer aux encaissements de routes à grande circulation, le long des routes à grande circulation, aux sorties de tunnel, aux sorties de parking.

L'invention concerne aussi l'utilisation d'une composition telle que définie précédemment pour la fabrication d'un parement anti-bruits absorbant acoustique et dépolluant.

Dans un aspect avantageux de la présente invention, le parement anti-bruit absorbant acoustique et dépolluant est en outre obtenu à l'aide d'une composition intermédiaire, appliquée entre la composition selon l'invention et le support rigide. Cette composition intermédiaire est constituée des mêmes composants que la composition selon l'invention, et est dépourvue de photocatalyseur.

La surface des parements anti-bruits absorbants acoustiques et dépolluants de l'invention est susceptible de se présenter sous toute forme appropriée, pour répondre à des critères esthétiques, mais surtout afin d'améliorer les propriétés d'absorption des bruits. Par exemple la surface peut avoir une forme cannelée dont la profondeur des cannelures peut aller jusqu'à 18 cm, ou une forme fractale.

La surface des parements de l'invention peut également présenter une forme qui peut réfléchir une partie du spectre sonore, l'autre partie étant absorbée par le matériau acoustique des compositions selon l'invention telles que définies ci-dessus.

La présente invention concerne également le procédé de fabrication d'un parement anti-bruits absorbant acoustique et dépolluant obtenu à partir d'une composition telle que définie ci-dessus. Ce procédé comprend les étapes suivantes :
■ coulage d'une composition selon l'invention telle que définie ci-dessus dans un moule approprié,
■ éventuellement dans un deuxième temps coulage d'une composition intermédiaire dépourvue de particules de photocatalyseur,
■ coulage de la couche constitué du support rigide,
les différentes couches étant coulées les unes à la suite des autres sans observer de temps de séchage entre chaque étape.

Les exemples suivants illustrent l'invention sans présenter aucun caractère limitatif.

### Exemple 1 : Composition de revêtement type « béton de bois »

La composition suivante est préparée de façon classique par l'homme du métier, à l'aide de malaxeur.
(les quantités sont exprimées en pourcentage du mélange total)

| | |
|---|---|
| Ciment | 24,1 % |
| TiO2 | 10,4 % |
| Bois humide | 44,8 % |
| Eau | 19,8 % |
| Colorant | 0,8 % |

### Exemple 2 : Composition de revêtement type « béton léger »

La composition suivante est préparée de façon classique par l'homme du métier, à l'aide de malaxeur
(les quantités sont exprimées en pourcentage du mélange total)

| | |
|---|---|
| Ciment | 29,7 % |
| TiO2 | 12,7 % |
| Billes d'argile | 31,4 % |
| Sable | 13,2 % |
| Eau | 13,0 % |

### Exemple 3 : Composition de revêtement type « béton léger »

La composition suivante est préparée de façon classique par l'homme du métier, à l'aide d'un malaxeur
(les quantités sont exprimées en pourcentage du mélange total)

| | |
|---|---|
| Ciment | 9,4 % |
| Pouzzolane | 8,2 % |
| TiO2 | 6,0 % |
| Argile expansée | 4,7 % |
| Eau | 11,7 % |

### Exemple 4 : Parement anti-bruits absorbant acoustique et dépolluant :

■ Un moule en bois possédant une forme cannelée dont les cannelures ont une profondeur de 15 cm est installé.
■ La composition de l'exemple 3 est coulée dans le moule jusqu'à remplir entièrement les cannelures.
■ Immédiatement après, une composition intermédiaire, identique à celle de l'exemple 3 sans TiO2 est coulée sur une épaisseur de 15 cm.
■ Sans attendre, le support constitué de béton est alors coulé.
■ Le parement est ensuite démoulé une fois la résistance requise pour le béton atteinte.

## Revendications

1. Composition de revêtement pour parements anti-bruits absorbants acoustiques et dépolluants comprenant un photocatalyseur comprenant des particules de Ti02, au moins un liant hydraulique choisi parmi les ciments ou les composés siliconés, au moins un matériau absorbant acoustique choisi parmi les copeaux de bois, les billes d'argile expansée, et les billes de caoutchouc, et de l'eau, la quantité de matériau absorbant acoustique variant entre 20 et 60 % en poids par rapport au poids total de la composition, et préférentiellement entre 25 et 50 %.

2. Composition selon l'une des revendications 1 ou 2, **caractérisée en ce que** la quantité de particules de Ti02 est comprise entre 0,5 % et 20 % en poids par rapport au poids total de la composition et préférentiellement entre 5 % et 15 %.

3. Composition selon l'une des revendications 1 ou 2, **caractérisée en ce que** le liant hydraulique est un ciment.

4. Composition selon la revendication 3, **caractérisée en ce que** une partie du ciment est remplacé par du pouzzolane.

5. Composition selon l'une des revendications 1 ou 2, **caractérisée en ce que** le composé siliconé est choisi parmi les silices colloïdales et les polyorganosiloxanes.

6. Composition selon l'une des revendications 1 à 5, **caractérisée en ce que** le liant hydraulique est présent en une quantité comprise entre 10 % et 50 % en poids par rapport au poids total de la composition, et préférentiellement entre 13 % et 30 %.

7. Composition selon l'une des revendications 1 à 6, **caractérisée en ce que** les copeaux de bois sont obtenus à partir d'Epicéa.

8. Composition selon la revendication 8, **caractérisée en ce que** les copeaux de bois ont une taille moyenne comprise entre 3 et 6 mm.

9. Composition selon l'une des revendications 1 à 6, **caractérisée en ce que** les billes d'argile ont un diamètre moyen compris entre 2 et 6 mm.

10. Composition selon l'une des revendications 1 à 9, **caractérisée en ce qu'**elle comprend en outre du sable, en une quantité allant jusqu'à 70 % en poids par rapport au poids total de la composition.

11. Composition selon l'une des revendications 1 à 10, **caractérisée en qu'**elle contient en outre un ou plusieurs oxydes métalliques de colorations.

12. Parement anti-bruit absorbant acoustique et dépolluant **caractérisé en ce qu'**il est obtenu à partir d'une composition selon l'une des revendications 1 à 11 appliquée sur un support rigide.

13. Parement selon la revendication 12, **caractérisé en ce que** le support est un béton.

14. Utilisation d'une composition selon l'une des revendications 1 à 11 pour la fabrication d'un parement anti-bruits absorbant acoustique et dépolluant.

15. Procédé de fabrication d'un parement anti-bruit absorbant acoustique et dépolluant **caractérisé en ce qu'**il comprend les étapes suivantes :
■ coulage d'une composition selon l'une des revendications 1 à 11, dans un moule de forme adaptée,
■ éventuellement coulage dans un deuxième temps d'une composition intermédiaire dépourvue de particules de photocatalyseur,
■ coulage de la couche support, les différentes couches étant coulées les unes à la suite des autres,
et **en ce que** les différentes couches sont coulées les unes à la suite des autres sans observer de temps de séchage entre chaque étape.

## Claims

1. A coating composition for depolluting and acoustic absorbent anti-noise facings comprising a photocatalyst comprising TiO₂ particles, a hydraulic binder selected from cements or silicone compounds, at least one acoustic absorbent material selected from wood cuttings, expanded clay beads, and rubber beads, and water, the amount of acoustic absorbent material varying between 20 and 60% by weight based on the total weight of the composition, and preferentially between 25 and 50%.

2. The composition according to any of claims 1 or 2, **characterized in that** the amount of TiO₂ particles is comprised between 0.5% and 20% by weight based on the total weight of the composition, and preferentially between 5% and 15%.

3. The composition according to any of claims 1 or 2, **characterized in that** the hydraulic binder is a cement.

4. The composition according to claim 3, **characterized in that** a portion of the cement is replaced with pozzolan.

5. The composition according to any of claims 1 or 2, **characterized in that** the silicone compound is selected from colloidal silicas and polyorganosiloxanes.

6. The composition according to any of claims 1 to 5, **characterized in that** the hydraulic binder is present in an amount comprised between 10% and 50% by weight based on the total weight of the composition, and preferentially between 13% and 30%.

7. The composition according to any of claims 1 to 6, **characterized in that** the wood cuttings are obtained from spruce.

8. The composition according to claim 7, **characterized in that** the wood cuttings have an average size comprised between 3 and 6 mm.

9. The composition according to any of claims 1 to 6, **characterized in that** the clay beads have an average diameter comprised between 2 and 6 mm.

10. The composition according to any of claims 1 to 9, **characterized in that** it further comprises sand in an amount ranging up to 70% by weight based on the total weight of the composition.

11. The composition according to any of claims 1 to 10, **characterized in that** it further contains one or more coloration metal oxides.

12. A depolluting and acoustic absorbent anti-noise facing **characterized in that** it is obtained from a composition according to any of claims 1 to 11, applied on a rigid support.

13. The facing according to claim 12, **characterized in that** the support is in concrete.

14. The use of a composition to any of claims 1 to 11 for manufacturing a depolluting and acoustic absorbent anti-noise facing.

15. A method for manufacturing a depolluting and acoustic absorbent anti-noise facing, **characterized in that** it comprises the following steps:
■ casting a composition according to any of claims 1 to 11, in a mold of suitable shape,
■ optionally in a second phase, casting an intermediate composition free of photocatalyst particles,
■ casting of the supporting layer, the different layers being casted one following another,
and **in that** the different layers are cast one following another without observing a drying period between every step.

## Patentansprüche

1. Beschichtungszusammensetzung für geräuschdämmende und abgasreinigende Schallschutzverkleidungen, die einen Photokatalysator, der TiO₂-Teilchen umfasst, mindestens ein hydraulisches Bindemittel, das aus Zementen oder Silikonverbindungen ausgewählt ist, mindestens ein geräuschdämmendes Material, das aus Sägespäne, expandierten Tonkügelchen und Kautschukkügelchen ausgewählt ist, und Wasser umfasst, wobei die Menge des geräuschdämmenden Materials zwischen 20 und 60 Gew.-%, bezogen auf das Gesamtgewicht der Zusammensetzung, und vorzugsweise zwischen 25 und 50 % variiert.

2. Zusammensetzung nach einem der Ansprüche 1 oder 2, **dadurch gekennzeichnet, dass** die Menge der TiO₂-Teilchen zwischen 0,5 Gew.-% und 20 Gew.-%, bezogen auf das Gesamtgewicht der Zusammensetzung, und vorzugsweise zwischen 5 % und 15 % liegt.

3. Zusammensetzung nach einem der Ansprüche 1 oder 2, **dadurch gekennzeichnet, dass** es sich bei dem hydraulischen Bindemittel um einen Zement handelt.

4. Zusammensetzung nach Anspruch 3, **dadurch gekennzeichnet, dass** ein Teil des Zements durch Puzzolan ersetzt wird.

5. Zusammensetzung nach einem der Ansprüche 1 oder 2, **dadurch gekennzeichnet, dass** die Silikonverbindung aus kolloidalen Siliciumdioxiden und Polyorganosiloxanen ausgewählt ist.

6. Zusammensetzung nach einem der Ansprüche 1 bis 5, **dadurch gekennzeichnet, dass** das hydraulische Bindemittel in einer Menge vorliegt, die zwischen 10 Gew.-% und 50 Gew.-%, bezogen auf das Gesamtgewicht der Zusammensetzung, und vorzugsweise zwischen 13 % und 30 % liegt.

7. Zusammensetzung nach einem der Ansprüche 1 bis 6, **dadurch gekennzeichnet, dass** die Sägespäne aus Fichte erhalten wird.

8. Zusammensetzung nach Anspruch 7, **dadurch gekennzeichnet, dass** die Sägespäne eine durchschnittliche Größe aufweisen, die zwischen 3 und 6 mm liegt.

9. Zusammensetzung nach einem der Ansprüche 1 bis 6, **dadurch gekennzeichnet, dass** die Tonkügelchen einen durchschnittlichen Durchmesser aufweisen, der zwischen 2 und 6 mm liegt.

10. Zusammensetzung nach einem der Ansprüche 1 bis 9, **dadurch gekennzeichnet, dass** sie außerdem Sand in einer Menge von bis zu 70 Gew.-%, bezogen auf das Gesamtgewicht der Zusammensetzung, umfasst.

11. Zusammensetzung nach einem der Ansprüche 1 bis 10, **dadurch gekennzeichnet, dass** sie außerdem ein oder mehrere Metalloxide zur Färbung enthält.

12. Geräuschdämmende und abgasreinigende Schallschutzverkleidung, **dadurch gekennzeichnet, dass** sie aus einer Zusammensetzung nach einem der Ansprüche 1 bis 11 erhalten wird, die auf einen festen Träger aufgebracht wird.

13. Verkleidung nach Anspruch 12, **dadurch gekennzeichnet, dass** es sich bei dem Träger um einen Beton handelt.

14. Verwendung einer Zusammensetzung nach einem der Ansprüche 1 bis 11 zur Herstellung einer geräuschdämmenden und abgasreinigenden Schallschutzverkleidung.

15. Verfahren zur Herstellung einer geräuschdämmenden und abgasreinigenden Schallschutzverkleidung, **dadurch gekennzeichnet, dass** es die folgenden Schritte umfasst:
■ Gießen einer Zusammensetzung nach einem der Ansprüche 1 bis 11 in eine Gussform mit geeigneter Form,
■ gegebenenfalls ein zweites Mal Gießen einer Zwischenverbindung, die frei von Photokatalysatorteilchen ist,
■ Gießen der Deckschicht, wobei unterschiedliche Schichten nacheinander gegossen werden,
und dadurch, dass die unterschiedlichen Schichten nacheinander gegossen werden, ohne die Trocknungszeit zwischen jedem Schritt zu beachten.
